(19) Europäisches Patentamt

European Patent Office

Office européen des brevets

(11) **EP 1 258 499 A1**

(12) **DEMANDE DE BREVET EUROPEEN**

(43) Date de publication:
**20.11.2002 Bulletin 2002/47**

(51) Int Cl.7: **C08F 12/08**, C08F 12/04,
C08F 4/46, C08F 4/50,
C08F 4/54, C08F 297/04

(21) Numéro de dépôt: **02356089.9**

(22) Date de dépôt: **14.05.2002**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **17.05.2001 FR 0106518**

(71) Demandeur: **MSSA
73600 Saint Marcel (FR)**

(72) Inventeurs:
• **Maréchal, Jean-Marc
33600 Pessac (FR)**

• **Radhakrishnan, Bindushree
33600 Pessac (FR)**
• **Deffieux, Alain
33000 Bordeaux (FR)**
• **Barbier, Marianne
73600 Saint Marcel (FR)**

(74) Mandataire: **Mougeot, Jean-Claude et al
PECHINEY,
217, cours Lafayette
69451 Lyon Cedex 06 (FR)**

(54) **Procédé de polymérisation anionique stéréospécifique contrôlée du styrène**

(57) L'invention a pour objet un procédé de polymérisation anionique stéréospécifique contrôlée de dérivés styréniques dans lequel on met en contact, dans un solvant, un monomère styrénique avec un système catalytique comprenant au moins :

- un dérivé alcalin (I) et
- un dérivé alkyl magnésien (II)

représentés respectivement par les formules ;

$$* R\text{-}X\text{-}M_t \qquad (I)$$

où R est un groupe alkyle, cycloalkyle ou aryle éventuellement substitué et pouvant également porter des hétéroatomes, X est un hétéroatome tel que O, N ou S, ou un atome de carbone, et $M_t$ est un métal alcalin ou alcalino-terreux.

$$* R'\text{-}Mg\text{-}X\text{-}R'' \qquad (II)$$

ou R' et R'' sont des groupes alkyles, cycloalkyles ou aryles éventuellement substitués pouvant également porter des hétéroatomes, X est un hétéroatome tel que O, N ou S, ou un atome de carbone, et Mg est un atome de magnésium.

Le procédé selon l'invention permet de contrôler la stéréorégularité des chaînes dans une gamme allant graduellement des structures à forte tendance isotactique à celles à forte tendance syndiotactique.

## Description

### Domaine de l'invention

La présente invention concerne un procédé pour la polymérisation anionique stéréospécifique contrôlée du styrène à l'aide d'un catalyseur spécifique et les polymères et copolymères stéréoréguliers qui en sont issus.

### Etat de la technique

La polymérisation stéréospécifique isotactique et syndiotactique du styrène est connue au moyen de catalyseurs Ziegler-Natta ou métallocènes à base de complexes d'un métal de transition (Ti, Zr, Ni, principalement). La polymérisation partiellement isospécifique du styrène au moyen de catalyseurs ou d'amorceurs anioniques est également connue.

La synthèse de polystyrène cristallisable à forte tendance syndiotactique a été réalisée pour la première fois par Ishihara en utilisant des catalyseurs à base de titane (semi-métallocènes) en présence de méthylaluminoxane, et elle est décrite dans les brevets EP 0210615 et EP 0224097 au nom d'Idemitsu Kosan. Les polymérisations conduisent à des polymères semi-cristallins possédant un point de fusion élevé, mais qui, en contrepartie, sont totalement insolubles dans les solvants organiques usuels et sont très difficiles à mettre en forme. De plus, les polymérisations ne sont pas contrôlées, dans le sens où les centres actifs ne sont pas persistants. Ceci n'autorise pas un contrôle précis des masses molaires des polymères ni la possibilité de fonctionnalisation des extrémités de chaînes, ni encore la synthèse de copolymères à blocs.

La synthèse de polystyrène isotactique cristallisable a été réalisée dès le début du développement des catalyseurs Ziegler-Natta. Cependant, les polymères isotactiques sont toujours obtenus en mélange avec une fraction atactique plus ou moins importante, ce qui nécessiterait leur fractionnement dans le cas d'une application industrielle. Comme pour les polystyrènes syndiotactiques obtenus à partir de métallocènes, la polymérisation n'est ni contrôlée ni vivante. Il est également possible de générer des polystyrènes isotactiques cristallins à l'aide de catalyseurs de type anionique, comme décrit au brevet US 3161625 de Monsanto Chemical. Là encore, ces polystyrènes isotactiques ne représentent qu'une fraction, de proportion variable, de la totalité du polymère formé, ce qui nécessite a priori un fractionnement. La synthèse de copolymères à blocs, polystyrène-b-polydiène par exemple, si elle a été décrite récemment, ne permet d'obtenir qu'une fraction stéréospécifique en mélange avec des chaînes d'homopolymères constitutifs des deux blocs. De plus, les synthèses de copolymères diblocs sont réalisées à partir de blocs polybutadiène ou polyisoprène préparés dans une première étape dans les conditions classiques des polymérisations anioniques (amorçage par un alkyl-lithium), la stéréorégulation n'étant réalisée que lors de l'amorçage du bloc polystyrène. L'efficacité de cet amorçage n'est que très partiel et donne une forte proportion des chaînes homopolyisoprène.

### But et objet de l'invention

Le but de l'invention est de fournir un procédé de polymérisation anionique stéréospécifique du styrène permettant de contrôler la stéréorégularité des chaînes dans une gamme allant graduellement des structures à forte tendance isotactique (par exemple 90%) à celles à forte tendance syndiotactique (par exemple 75%).

La présente invention a pour objet un procédé de polymérisation anionique stéréospécifique contrôlée de dérivés styréniques dans lequel on met en contact, dans un solvant, un monomère styrénique avec un système catalytique comprenant au moins :

a) un dérivé alcalin (I) et
b) un dérivé alkyl magnésien (II)

représentés respectivement par les formules ;

$$* \text{ R-X-M}_t \tag{I}$$

où R est un groupe alkyle, cycloalkyle ou aryle éventuellement substitué et pouvant également porter des hétéroatomes, X est un hétéroatome tel que O, N ou S, ou un atome de carbone, et $M_t$ est un métal alcalin ou alcalino-terreux.

$$* \text{ R'-Mg-X-R''} \tag{II}$$

ou R' et R" sont des groupes alkyles, cycloalkyles ou aryles éventuellement substitués pouvant également porter des hétéroatomes, X est un hétéroatome tel que O, N ou S, ou un atome de carbone, et Mg est un atome de magnésium.

La présente invention a également pour objet un catalyseur de polymérisation anionique stéréospécifique contrôlée de dérivés styréniques constitué du mélange d'au moins un dérivé du type (I) et d'au moins un dérivé du type (II), ainsi que les polystyrènes de tacticité contrôlée obtenus par ce procédé.

## Description de l'invention

L'invention réside dans l'utilisation, pour la stéréorégulation de la polymérisation de dérivés styréniques, de systèmes catalytiques constitués d'un mélange de dérivés de type (I) et de type (II), dans des proportions pouvant varier d'un rapport (I)/(II) de 0,01 jusqu'à 10. Plusieurs dérivés de type (I) ou de type (II) tels que ceux décrits ci-dessus peuvent être mis en oeuvre ensemble.

Les solvants utilisés sont préférentiellement des solvants hydrocarbonés. Toutefois dans certains cas particuliers comme la synthèse de polymère à tendance syndiotactique, la polymérisation peut être réalisée dans des solvants plus polaires ou plus complexants comme les éthers ou le THF. La température à laquelle est effectuée la polymérisation selon l'invention est généralement comprise entre -80°C à +120°C.

La synthèse du complexe catalytique peut être réalisée à l'avance, dans des conditions de température comprises entre -40°C et +50°C. Elle peut également être réalisée in situ, par ajout d'un ou des réactifs directement dans le milieu de polymérisation.

Dans ce procédé, contrairement aux procédés anioniques précédents, toutes les chaînes présentent l'avantage d'avoir une même tacticité, ce qui permet d'utiliser les polymères de différentes stéréospécificités obtenus sans étape de fractionnement.

De plus, le caractère persistant des centres propagateurs durant toute la croissance des chaînes, typique des polymérisations anioniques vivantes, permet de contrôler leurs dimensions, les distributions moléculaires, les fonctionnalités terminales et de synthétiser avec des diènes des copolymères à blocs possédant des blocs polystyrène de tacticité variée, par exemple des diblocs du type $_t$PS-PD ou des triblocs du type $_t$PS-PD-$_t$PS, où $_t$PS signifie un bloc PS de tacticité contrôlée et PD un bloc polydiène.

## Exemples

## Caractérisation des polyméres:

La tacticité est déterminée par résonance magnétique nucléaire (RMN) du carbone 13 à l'aide d'un appareil Brüker AC-250 FT-NMR.

Les spectres sont effectués à température ambiante dans le $CDCl_3$. Les pourcentages en triades isotactique (mm), syndiotactique (rr) et hétérotactique (mr) sont obtenus par déconvolution du spectre RMN du carbone quaternaire $C_1$ du groupement phényle. La valeur de la pentade isotactique (mmm) est déterminée à partir de la bande à 147 ppm selon la procédure décrite dans la littérature, par exemple dans l'article de T. Kawamura et al. Makromol. Chem., 1979, vol. 180, page 2001.

Les masses molaires moyennes en nombre et la polymolécularité des polymères résultant de la synthèse sont déterminées par chromatographie d'exclusion stérique (size exclusion chromatography SEC), sur un appareil Varian équipé d'une pompe JASCO HPLC du type 880-PU, d'un détecteur UV, d'un réfractomètre, et de colonnes à gel TSK calibrées à partir de polystyrènes standards.

L'efficacité du catalyseur est calculée à partir du rapport $\dfrac{\overline{Mn_0}}{\overline{Mn}}$ * *rendement*, sur la base d'un procédé de polymérisation vivante (réactions de terminaison et de transfert négligeables). $\overline{Mn_0}$ est calculé à partir du rapport de la masse de monomère introduit sur la concentration en amorceur. On fait l'hypothèse qu'une chaîne polymère est formée par atome de métal introduit. Le métal pris en compte est celui introduit en défaut. $\overline{Mn}_{exp}$ est déterminé par chromatographie SEC.

Les tests de fractionnement ont été effectués dans la butan-2-one bouillante. Tous les échantillons, même ceux avec les teneurs les plus élevées en triades isotactiques ou syndiotactiques conduisent à un polystyrène soluble à 100%.

Ces résultats, ainsi que les valeurs de la polymolécularité, sont en accord avec la présence d'un site unique de polymérisation stéréospécifique actif.

## Exemple 1

Dans un ballon sec de 100 mL équipé d'un agitateur magnétique et placé à 20°C, on introduit successivement 2 ml (2.10$^{-4}$ mol) d'une solution de *ter*-butanolate de lithium dans le cyclohexane, 2 ml d'une solution of *n,s* dibutylma-

gnésium (2.10$^{-4}$ mol) dans du cyclohexane, et 40 ml de cyclohexane préalablement séché. On ajoute ensuite 2,2 ml (2g) de styrène préalablement séché. La durée de réaction est de 8 heures, puis la polymérisation est stoppée par addition de 1ml de méthanol. Le polymère est précipité dans du méthanol, filtré puis séché sous vide pendant 12 heures.

**Example 2**

Dans un ballon sec de 100 mL équipé d'un agitateur magnétique et placé à 20°C, on introduit successivement 19,2 mg (2.10$^{-4}$ mol) de *ter*-butanolate de sodium, 2 ml d'une solution of *n,s* dibutylmagnésium (2.10$^{-4}$ mol) dans du cyclohexane, et 40 ml de cyclohexane préalablement séché. On ajoute ensuite 2,2 ml (2g) de styrène préalablement séché. La durée de réaction est de 12 heures, puis la polymérisation est stoppée par addition de 1ml de méthanol. Le polymère est précipité dans du méthanol, filtré puis séché sous vide pendant 12 heures.

**Exemple 3**

Dans un ballon sec de 100 mL équipé d'un agitateur magnétique et placé à 20°C, on introduit successivement 22,4 mg (2.10$^{-4}$ mol) de *ter*-butanolate de potassium, 4 ml de solution of *n,s* dibutylmagnésium (4.10$^{-4}$ mol) dans du cyclohexane, et 40 ml de cyclohexane préalablement séché. On ajoute ensuite 2,2 ml (2g) de styrène préalablement séché. La durée de la réaction est de 12 heures, puis la polymérisation est stoppée par addition de 1ml de méthanol. Le polymère est précipité dans du méthanol, filtré puis séché sous vide pendant 12 heures.

**Exemple 4**

Dans un ballon sec de 100 mL équipé d'un agitateur magnétique et placé à 0°C, on introduit successivement 22,4 mg (2.10$^{-4}$ mol) de *ter*-butanolate de potassium, 5 ml d'une solution de *n,s* dibutylmagnésium (5.10$^{-4}$ mol) dans du méthylcyclohexane, et 40 ml de méthylcyclohexane préalablement séché. On ajoute ensuite 2,2 ml (2g) de styrène séché. La durée de réaction est de 8 heures, puis la polymérisation est stoppée par addition de 1ml de méthanol. Le polymère est précipité dans du méthanol, filtré puis séché sous vide pendant 12 heures.

**Exemple 5**

Dans un ballon sec de 100 mL équipé d'un agitateur magnétique et placé à -20°C, on introduit successivement 22,4 mg (2.10$^{-4}$ mol) de *ter*-butanolate de potassium, 5 ml d'une solution de *n,s* dibutylmagnésium (2.10$^{-4}$ mol) dans du méthylcyclohexane, et 40 ml de méthylcyclohexane préalablement séché. La température est abaissée jusqu'à -40°C, puis on ajoute 2,2 ml (2g) de styrène séché. La durée de réaction est de 30 heures, puis la polymérisation est stoppée par addition de 1ml de méthanol. Le polymère est précipité dans du méthanol, filtré puis séché sous vide pendant 12 heures.

**Exemple 6**

Dans un ballon sec de 100 mL équipé d'un agitateur magnétique et placé à -40°C, on introduit successivement 22,4 mg (2.10$^{-4}$ mol) de *ter*-butanolate de potassium, 5 ml de solution de *n,s* dibutylmagnésium (2.10$^{-4}$ mol) dans du méthylcyclohexane, et 40 ml de méthylcyclohexane préalablement séché. On ajoute ensuite 2,2 ml (2g) de styrène séché. La durée de réaction est de 48 heures, puis la polymérisation est stoppée par addition de 1ml de méthanol. Le polymère est précipité dans du méthanol, filtré puis séché sous vide pendant 12 heures.

**Exemple 7**

Dans un ballon sec de 100 mL équipé d'un agitateur magnétique et placé à 0°C, on a introduit successivement 25,6 mg (2.10$^{-4}$ mol) de triméthylsilanolate de potassium, 2 ml d'une solution de *n,s* dibutylmagnésium (2.10$^{-4}$ mol) dans du méthylcyclohexane, et 40 ml de méthylcyclohexane préalablement séché. On ajoute ensuite 2,2 ml (2g) de styrène séché. La durée de réaction est de 48 heures, puis la polymérisation est stoppée par addition de 1ml de méthanol. Le polymère est précipité dans du méthanol, filtré puis séché sous vide pendant 12 heures.

**Exemple 8 (contrôle du caractère vivant)**

Dans un ballon sec de 100 mL équipé d'un agitateur magnétique et placé à 20°C, on a introduit successivement 22,4 mg (2.10$^{-4}$ mol) d'une solution de potassium *ter*-butanolate de potassium, 2 ml de solution de *n,s* dibutylmagnésium (4.10$^{-4}$ mol) dans du cyclohexane, et 40 ml de cyclohexane préalablement séché. On ajoute ensuite une première quantité de 2,2 ml (2g) de styrène séché. La durée de réaction est de 1,5 heures, et un échantillon (a) a été prélevé pour analyse. On ajoute une nouvelle quantité de 5 ml (4,5 g) de styrène séché. La durée de réaction est alors de 8 heures, puis la polymérisation est stoppée par addition de 1ml de méthanol. Le polymère est précipité dans du méthanol et séché sous vide pendant 12 heures.

Pour l'échantillon (a), on a mesuré :

$$\overline{Mn} = 19000 \text{g.mol}^{-1};$$

$$\frac{\overline{Mw}}{\overline{Mn}} = 1,3$$

et pour le polystyrène final : $\overline{Mn} = 50000$ g.mol$^{-1}$; $\frac{\overline{Mw}}{\overline{Mn}} = 1,3$

On constate que toutes les chaînes polymères croissent à la même vitesse sans se désactiver.

**Exemple 9 (synthèse d'un bloc de copolymère PS-b-PI)**

Dans un ballon sec de 100 mL équipé d'un agitateur magnétique et placé à 20°C, on introduit successivement 22,4 mg (2.10$^{-4}$ mol) d'une solution de *ter*-butanolate de potassium, 2 ml d'une solution de *n,s* dibutylmagnésium (4.10$^{-4}$ mol) dans du méthylcyclohexane, et 40 ml de méthylcyclohexane préalablement séché. On ajoute ensuite une première quantité de 2,2 ml (2g) de styrène séché. La durée de réaction est de 5 heures, et un échantillon (b) est prélevé pour analyse. On ajoute 4,4 ml (3 g) d'isoprène séché. La durée de réaction est de 24 heures, puis la polymérisation est stoppée par addition de 1ml de méthanol. Le polymère est précipité dans du méthanol, filtré puis séché sous vide pendant 12 heures.

Sur l'échantillon (b) correspondant au premier bloc de polystyrène, on mesure:

$$\overline{Mn} = 19000 \text{g.mol}^{-1} ;$$

$$\frac{\overline{Mw}}{\overline{Mn}} = 1,3 ;$$

$$mm (\%) = 52 ;$$

$$mr+rm (\%) = 33;$$

$$rr (\%) = 15.$$

Sur le copolymère polystyrene-b-polyisoprène:

$$\overline{Mn} = 34000 \text{ g.mol}^{-1} ;$$

$$\frac{\overline{Mw}}{\overline{Mn}} = 1,3$$

La microstructure du bloc de polyisoprène a été mesurée par RMN :

$$\text{Unités } 1,4 = 43\% ;$$

unités 1,2 = 5% ;

unités 3,4 = 52%.

Les résultats de la polymérisation et les propriétés des polymères pour les exemples 1 à 8 ont été rassemblés au tableau 1, dans lequel mm, mr + rm et rr représentent les proportions d'enchaînements de type iso, hétéro et syndiotactiques dans les polymères :

Tableau 1

| N° exemple | $\overline{Mn}$ | Ip=$\dfrac{\overline{Mw}}{\overline{Mn}}$ | Rendement | Efficacité d'amorçage | mm (%) | mr+rm (%) | rr (%) | mmmm (%) |
|---|---|---|---|---|---|---|---|---|
| 1 | 74000 | 1,2 | 89% | 12% | 9 | 20,5 | 70,5 | 0 |
| 2 | 53000 | 1,3 | 81% | 15% | 27 | 27,5 | 45,5 | - |
| 3 | 7600 | 1,5 | 76,5% | 100% | 64 | 28 | 8 | 15,5 |
| 4 | 21000 | 1,6 | 40,0% | 19% | 74 | 21,5 | 4,5 | 24 |
| 5 | 210000 | 1,26 | 38,9% | 9% | 76 | 21,5 | 2,5 | 31 |
| 6 | 6400 | 1,4 | 5,0% | 8% | 86 | 14 | 0 | 44 |
| 7 | 14500 | 1,3 | 4% | 8% | 75 | 21 | 4 | 20 |
| 8a | 19000 | 1,3 | | | 63 | 29 | 8 | 13 |
| 8b | 50000 | 1,3 | 87,5% | 85% | 52 | 32 | 16 | 7 |

## Revendications

1. Procédé de polymérisation anionique stéréospécifique contrôlée de dérivés styréniques dans lequel on met en contact, dans un solvant, un monomère styrénique avec un système catalytique comprenant au moins :

   - un dérivé alcalin (I) et
   - un dérivé alkyl magnésien (II)

   représentés respectivement par les formules ;

$$* \ R\text{-}X\text{-}M_t \tag{I}$$

   où R est un groupe alkyle, cycloalkyle ou aryle éventuellement substitué et pouvant également porter des hétéroatomes, X est un hétéroatome tel que O, N ou S, ou un atome de carbone, et $M_t$ est un métal alcalin ou alcalino-terreux.

$$* \ R'\text{-}Mg\text{-}X\text{-}R'' \tag{II}$$

   ou R' et R'' sont des groupes alkyles, cycloalkyles ou aryles éventuellement substitués pouvant également porter des hétéroatomes, X est un hétéroatome tel que O, N ou S, ou un atome de carbone, et Mg est un atome de magnésium.

2. Procédé selon la revendication 1, **caractérisé en ce que** le rapport (I)/(II) des quantités pondérales de dérivés du type (I) et du type (II) est compris entre 0,01 et 10.

3. Procédé selon l'une des revendications 1 ou 2, **caractérisé en ce que** le solvant est un hydrocarbure.

**4.** Procédé selon l'une des revendications 1 ou 2, **caractérisé en ce que** le solvant est un ether ou du THF.

**5.** Procédé selon l'une des revendications 1 à 4, **caractérisé en ce qu'**on copolymérise stéréospécifiquement les dérivés du styrène avec des diènes pour former des copolymères à blocs $_t$PS-PD et $_t$PS-PD-$_t$PS, où $_t$PS signifie un bloc PS de tacticité contrôlée, et PD un bloc polydiène

**6.** Polystyrènes et copolymères polystyrène - polydiène à blocs de tacticité contrôlée issus du procédé selon l'une des revendications 1 à 5.

**7.** Mélange catalytique pour la polymérisation anionique stéréospécifique contrôlée de dérivés styréniques comprenant au moins :

- un dérivé alcalin (I) et
- un dérivé alkyl magnésien (II)

représentés respectivement par les formules :

$$* \ R-X-M_t \qquad \qquad (I)$$

où R est un groupe alkyle, cycloalkyle ou aryle éventuellement substitué et pouvant également porter des hétéroatomes, X est un hétéroatome tel que O, N ou S, ou un atome de carbone, et $M_t$ est un métal alcalin ou alcalino-terreux.

$$* \ R'-Mg-X-R'' \qquad \qquad (II)$$

ou R' et R'' sont des groupes alkyles, cycloalkyles ou aryles éventuellement substitués pouvant également porter des hétéroatomes, X est un hétéroatome tel que O, N ou S, ou un atome de carbone, et Mg est un atome de magnésium.

Office européen
des brevets

**RAPPORT DE RECHERCHE EUROPEENNE**

Numéro de la demande

EP 02 35 6089

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 98 07766 A (GAUSEPOHL HERMANN ;BASF AG (DE); LAETSCH STEFAN (DE); FISCHER WOLF) 26 février 1998 (1998-02-26) * exemples * | 1-7 | C08F12/08 C08F12/04 C08F4/46 C08F4/50 C08F4/54 |
| X | US 5 665 827 A (HALL JAMES E) 9 septembre 1997 (1997-09-09) * exemples * | 1-7 | C08F297/04 |
| X | EP 0 402 219 A (ATOCHEM ELF SA) 12 décembre 1990 (1990-12-12) * revendication * | 1-7 | |

**DOMAINES TECHNIQUES RECHERCHES (Int.Cl.7)**

C08F

Le présent rapport a été établi pour toutes les revendications

| Lieu de la recherche | Date d'achèvement de la recherche | Examinateur |
|---|---|---|
| MUNICH | 19 septembre 2002 | Pollio, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

EP 1 258 499 A1

ANNEXE AU RAPPORT DE RECHERCHE EUROPEENNE
RELATIF A LA DEMANDE DE BREVET EUROPEEN NO.　　EP 02 35 6089

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2002

| Document brevet cité au rapport de recherche | Date de publication | Membre(s) de la famille de brevet(s) | Date de publication |
|---|---|---|---|
| WO 9807766 A | 26-02-1998 | DE 19633273 A1 | 26-02-1998 |
| | | DE 19633272 A1 | 26-02-1998 |
| | | DE 19721403 A1 | 26-11-1998 |
| | | CN 1231679 A | 13-10-1999 |
| | | DE 59702613 D1 | 14-12-2000 |
| | | DE 59707512 D1 | 18-07-2002 |
| | | WO 9807765 A2 | 26-02-1998 |
| | | WO 9807766 A1 | 26-02-1998 |
| | | EP 0918805 A2 | 02-06-1999 |
| | | EP 0918806 A1 | 02-06-1999 |
| | | ES 2152706 T3 | 01-02-2001 |
| | | JP 2000516286 T | 05-12-2000 |
| | | US 6444762 B1 | 03-09-2002 |
| | | US 6303721 B1 | 16-10-2001 |
| US 5665827 A | 09-09-1997 | CA 2219574 A1 | 07-05-1998 |
| | | EP 0841356 A1 | 13-05-1998 |
| | | JP 10139842 A | 26-05-1998 |
| EP 0402219 A | 12-12-1990 | FR 2647795 A1 | 07-12-1990 |
| | | FR 2662443 A1 | 29-11-1991 |
| | | AT 121104 T | 15-04-1995 |
| | | CA 2054757 A1 | 06-12-1990 |
| | | DD 298112 A5 | 06-02-1992 |
| | | DE 69018517 D1 | 18-05-1995 |
| | | DE 69018517 T2 | 11-01-1996 |
| | | EP 0402219 A1 | 12-12-1990 |
| | | ES 2071053 T3 | 16-06-1995 |
| | | WO 9015084 A1 | 13-12-1990 |
| | | JP 2926607 B2 | 28-07-1999 |
| | | US 5629393 A | 13-05-1997 |
| | | US 5723559 A | 03-03-1998 |

EPO FORM P0460

Pour tout renseignement concernant cette annexe : voir Journal Officiel de l'Office européen des brevets, No.12/82